# EUROPÄISCHE PATENTSCHRIFT

(11) **EP 2 611 596 B1**
(45) Veröffentlichungstag und Bekanntmachung des Hinweises auf die Patenterteilung: **03.12.2014**
(21) Anmeldenummer: 11755010.3
(22) Anmeldetag: 31.08.2011
(51) Int. Cl.: B29C 67/00

(54) **VERFAHREN UND VORRICHTUNG ZUR HERSTELLUNG EINES DREIDIMENSIONALEN GEGENSTANDES**
METHOD AND APPARATUS FOR PRODUCING A THREE-DIMENSIONAL OBJECT
PROCÉDÉ ET DISPOSITIF DE PRODUCTION D'UN OBJET TRIDIMENSIONNEL

(30) Priorität: 02.09.2010 DE 102010044268
(43) Veröffentlichungstag der Anmeldung: 10.07.2013
(73) Patentinhaber: Arburg GmbH + Co. KG, 72290 Lossburg (DE)
(72) Erfinder: KEINATH, Renate, 72336 Balingen (DE)
(74) Vertreter: Reinhardt, Harry
(86) Internationale Anmeldenummer: PCT/EP2011/004380
(87) Internationale Veröffentlichungsnummer: WO 2012/028308

(56) Entgegenhaltungen:
- EP-A1- 1 886 793
- WO-A1-97/09125

## Beschreibung

Die Erfindung betrifft ein Verfahren sowie eine Vorrichtung zur Herstellung eines dreidimensionalen Gegenstandes aus verfestigbarem Material nach dem Oberbegriff der Ansprüche 1 und 6.

In der Kunststoffteileherstellung werden durch Spritzgießen oder Extrudieren in großen Losgrößen und Serien Teile hergestellt. Der Vorteil des Kunststoffspritzgießen beruht insbesondere auf der hochgenauen Herstellung von komplexen Teilgeometrien, wobei die Funktionsvielfalt des Spritzgießverfahrens in optimaler Weise die Anforderung an eine kostengünstige und wirtschaftliche Produktion von Kunststoffteilen abdeckt.

Andererseits besteht mehr und mehr ein Bedarf nach Kunststoffteilen, die in kleinsten Stückzahlen oder auch nur als Einzelstücke bis zu kleinen Losgrößen hergestellt werden, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping bekannt sind. Die Herstellung solcher Teile beruht in den meisten Fällen auf der Erzeugung einer Geometrie aus 3D-Daten. Diese Geometrien werden in unterschiedlichster Form durch entsprechende Mittel wie Aufschmelzen von Pulverschichten durch Wärmeeintrag, z.B. mittels Laser, generative Systeme wie Druckverfahren in unterschiedlicher verbindender Form der Pulverteile oder auch im sogenannten Schmelzstrangverfahren hergestellt.

Aus der dem Oberbegriff des Anspruches 1 zugrundeliegenden EP 1 886 793 A1 ist eine Vorrichtung bekannt, bei der eine in der Spritzgießtechnik im Prinzip bekannte Plastifiziereinheit an einen unter Druck setzbaren Materialspeicher für die fluide Phase eines Materials angekoppelt wird. Zur Erzeugung eines Gegenstandes auf einem Objektträger wird dieses Material über eine Austragsöffnung einer Austragseinheit in Form diskontinuierlicher Tropen ausgetragen. Aufgrund der Adhäsionskräfte des Materials sind dafür ein hoher Druck und Schmelztemperaturen für das Material erfoderlich, zumal der Tropfen eine Größe von 0,01 bis 0,5 mm³ aufweisen soll. Bei der dortigen Vorrichtung sind bereits Steuermittel für den Objektträger für Bewegungen in x-, y- als auch in z-Richtung relativ zur Austragseinheit vorgesehen. Dabei wird der Abstand zwischen Austragseinheit und Objektträger beim Einrichten der Vorrichtung so gewählt, dass die Tropfen auf ihrer Flugbahn einen frei fliegenden Tropfen ausbilden können.

WO 97/09125 offenbart ein Verfahren und eine Vorrichtung zur Herstellung eines dreidimensionalen Gegenstandes, wobei die Erzeugung von Tropfen gesteuert wird.

Ausgehend von diesem Stand der Technik liegt der vorliegenden Erfindung die Aufgabe zugrunde, ein Verfahren und eine Vorrichtung zur Herstellung eines dreidimensionalen Gegenstandes unter Verwendung verfestigbarer Materialien zu schaffen, die die Erzeugung der Tropfen unterstützen.

Diese Aufgabe wird durch ein Verfahren mit den Merkmalen des Anspruches 1 sowie durch eine Vorrichtung mit den Merkmalen des Anspruches 6 gelöst.

In der Praxis hat sich herausgestellt, dass es nur bedingt beim Abstand zwischen Austragseinheit und Objektträger bzw. dem darauf zu erstellenden dreidimensionalen Gegenstand darauf ankommt, dass sich ein frei fliegender Tropfen ausbilden kann. Dies ist zwar hilfreich, jedoch lässt sich die Tropfenbildung und auch die Form des erzeugten Gegenstandes dadurch verbessern, dass der Relativabstand zwischen Objektträger bzw. dreidimensionalem Gegenstand einerseits und Austrittsöffnung andererseits alternierend in entgegengesetzter Richtung beim Austragen der Tropfen und beim Auftragen der Tropfen verändert wird. So lässt sich z.B. vorzugsweise zur Erzeugung diskontinuierlicher Tropfen der Tropfenabriss dadurch beeinflussen, dass nach Auftreffen des Tropfens am Objekt durch Vergrößerung des Relativabstandes der Abriss beschleunigt wird. Vorzugsweise kann ebenfalls durch eine Beschleunigung entgegen der Schwerkraft die Verteilung des Tropfens auf dem Objekt dahingehend beeinflusst werden, dass Hohlräume besser ausgefüllt werden und eine Verflachung des Tropfens entsteht. Ebenso ist es von Vorteil, wenn vor Ansteuerung des nächsten Tropfens eine kurze Berührung des Tropfens durch die Austragseinheit erfolgt, um diesen quasi anzudrücken bzw. geometrisch zu stabilisieren, was zu einem ebenen Auftrag beiträgt.

Durch geeignete Steuermittel lässt sich die Vorrichtung damit so effizient einsetzen, dass selbst mit kleinsten Tropfen ein qualitativ hochwertiger dreidimensionaler Gegenstand wie ein Prototyp aus den 3D-Daten hergestellt werden kann. Zu beachten sind dabei die genannten Zusammenhänge bzw. Abstände zur Erzielung der entsprechenden Aufbauten und Geometrien.

Weitere Vorteile ergeben sich aus den Unteransprüchen und der nachfolgenden Beschreibung.

Im Folgenden wird die Erfindung anhand eines in den Figuren dargestellten Ausführungsbeispieles näher erläutert. Es zeigen:
- Fig. 1: eine schematische dreidimensionale Darstellung von Objektträger und Austragseinheit,
- Fig. 2a-2f: einen schematischen Ablauf beim Aufbringen eines Tropfens auf dem Objektträger.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

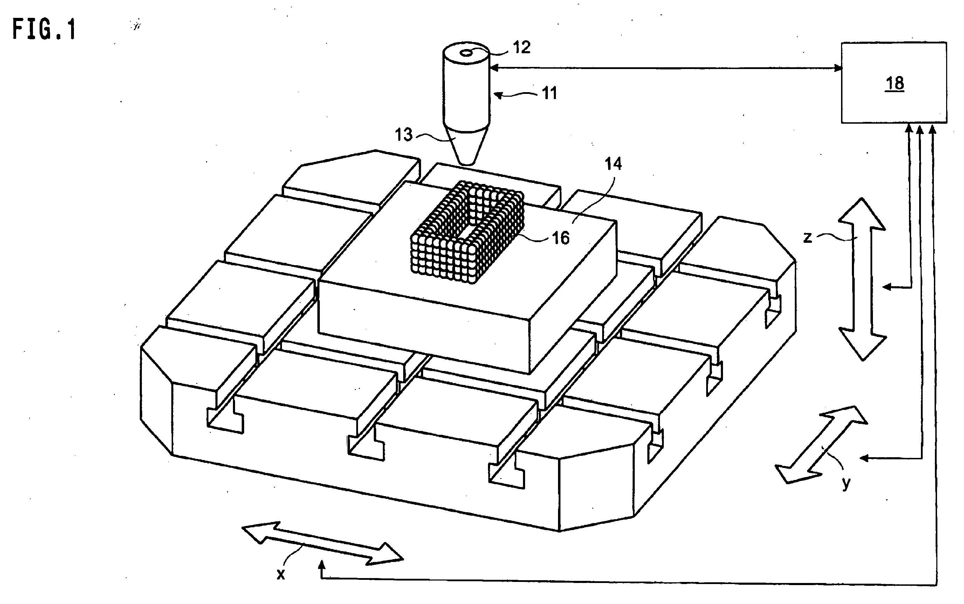

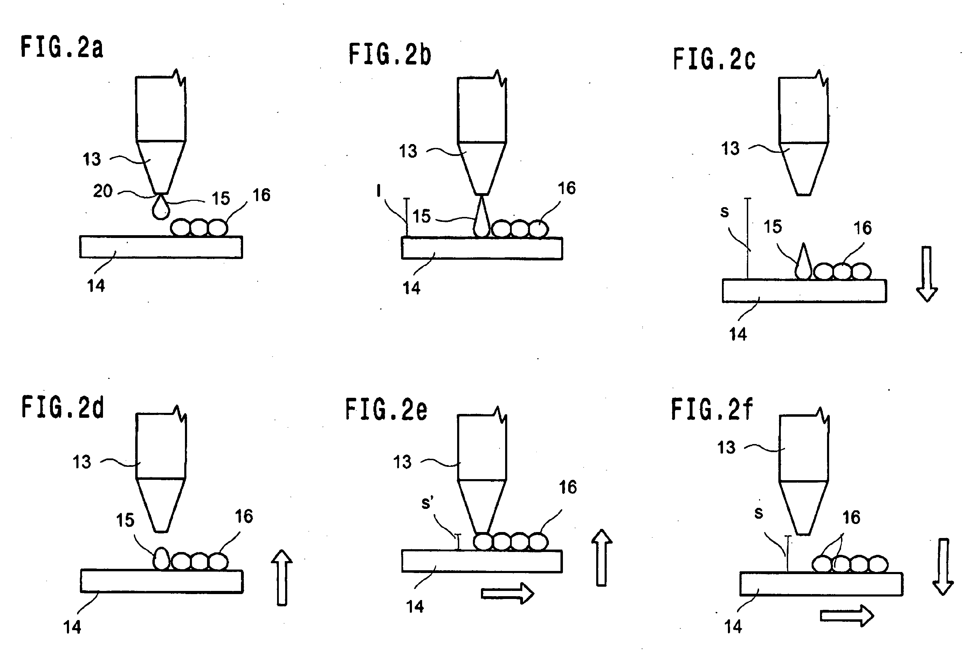

Figur 1 zeigt eine Vorrichtung zur Herstellung eines dreidimensionalen Gegenstandes 16 aus verfestigbarem Material, das entweder im Ausgangszustand in einer fluiden Phase vorliegt oder verflüssigt werden kann. Der Aufbau des dreidimensionalen Gegenstandes erfolgt durch sequenzielles Austragen von diskontinuierlichen Tropfen 15 aus einer taktbaren Austragseinheit. Schicht für Schicht wird das Objekt 16 auf einem Objektträger 14 durch die Tropfen 15 erstellt. Unter Einsatz von Steuermitteln 18 mit Hilfe von zugehörigen, zeichnerisch nicht dargestellten Aktoren kann der Objektträger 14 in x-, y- und z-Richtung verschoben werden. Die Steuermittel steuern zudem auch die Austragseinheit 13 an. Damit lässt sich unter anderem auch der Relativabstand s (Fig. 2c, 2f) zwischen Objektträger 14 oder dreidimensionalem Gegenstand 16 einerseits und Austrittsöffnung 20 der Austragseinheit 13 andererseits relativ zueinander zur Beeinflussung der Tropfenform beeinflussen. Mit anderen Worten kann der Objektträger 14 oder Gegenstand in Richtung auf die Austrittsöffnung und/oder die Austrittsöffnung 20 in Richtung auf den Objektträger hin oder von dem jeweiligen Gegenüber wegbewegt werden, um den Relativabstand zu verändern.

Die Austragseinheit 13 ist Teil einer an sich in der Spritzgießtechnik dem Grundsatz nach bekannten Plastifiziereinheit 11, die zugleich auch den unter Druck setzbaren Materialspeicher 12 zum Einbringen der fluiden Phase in den Materialspeicher umfasst. Der Druck auf die fluide Phase im Materialspeicher 12 erzeugt in direkter Kopplung den diskontinuierlichen Tropfen 15. Dies wird in der EP 1 886 793 A1 näher beschrieben.

Das verfestigbare Material ist ein plastifiziertes Material wie z.B. Silikon oder ein plastifizierbares Material wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recycelbares Material sein. Denkbar ist damit, dass das Material durch Aufschmelzen in die fluide Phase überführt wird und nach dem Ausbringen sich wieder verfestigt, oder dass es in der fluiden Phase zur Verfügung gestellt wird und nach dem Ausbringen z.B. durch Energiezufuhr verfestigt werden muss oder flüchtige Bestandteile aufweist, deren Verflüchtigung das Aushärten bewirkt. Beliebige andere Materialien können verwendet werden, sofern diese Materialien durch die Vorrichtung plastifizierbar und vor allem durch die wenigstens eine Austragseinheit 13 austragbar sind.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von auf den Objektträger 14 ,ausgerichteten' Tropfen 15 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform eines diskontinuierlichen Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 [Pa s], wobei vorzugsweise das verfestigbare Material ein in der Spritzgießtechnik üblicher Kunststoff oder ein Harz ist. Dies macht die Verarbeitung aus einem unter Druck setzbaren Materialspeicher 12 erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen 20 eingesetzt werden.

Vorzugsweise liegt das gewünschte Volumen des Tropfens 15 insbesondere im Bereich von 0,01 bis 0,5 mm³, vorzugsweise im Bereich von 0,05 bis 0,3 mm³ und besonders vorzugsweise im Bereich von etwa 0,1 mm³. Der Durchmesser der Austragsöffnung 20 ist insbesondere kleiner gleich 1mm, vorzugsweise etwa 0,1 mm. Bei einer durchaus üblichen Einspritzgeschwindigkeit von 100 [cm/s], die durch einen sogenannten Punktanguss mit 0,1 [mm] Durchmesser die Masse fördert, ergibt sich mit Volumenstrom durch Fläche ein Wert von 10.000 [m/s]. Dies führt für die fluide Phase zu einem laminaren Quellfluss mit Fliessgeschwindigkeiten bis zu 10.000 m/s.

Die Vorrichtung hat mit ihrer Austragseinheit 13 die Aufgabe, hochviskose fluide Materialien, wie aufgeschmolzene Kunststoffe, in kleinsten Mengen bis hinunter zu wenigen Mikrogramm aus einem Materialspeicher 12 auszutragen, der unter großem Druck und eventuell hoher Schmelztemperatur steht. Die kleinsten Mengen/Tropfen 15 des Materials werden in diskreten einzelnen Portionen ausgebracht, wobei deren Größe von der Vorrichtung beeinflussbar ist. Die ausgetragenen Portionen besitzen eine so hohe kinetische Energie, dass sie die Adhäsionskräfte überwinden können und von der Vorrichtung abheben und Tropfen 15 bilden, um auf dem Objektträger 14 den dreidimensionalen Gegenstand 16 aufzubauen.

Da es sich um flüssige, aber hochviskose Materialien handelt, mit hoher Adhäsionskraft und kleinem Gewicht, wird die kinetische Energie mittels einer Druckdifferenz zwischen Materialspeicher 12 und dem "Flugraum" für die Tropfen 15 übertragen. Die Portionierung erfolgt mittels einer getakteten Blende, die z.B. mit einer Düsennadel oder dergleichen als Verschlussmittel versehen ist. Bedingt durch die geforderten Dimensionen der Portionen als auch die Viskositätseigenschaften sind üblicherweise Drücke im Bereich von 100 MPa (1000 bar) und mehr, Verschlussblenden kleiner 0,1 mm und weiterhin Verschlusszeiten kleiner 0, 001 s erforderlich. Da die Materialien meist Kunststoffe sind, herrschen im Materialspeicher Schmelzetemperaturen bis zu 450° C.

Unter diesen Bedingungen müssen die diskontinuierlichen Tropfen 15 sich ausbilden können, andererseits sind die Anforderungen an die Qualität des herzustellenden dreidimensionalen Gegenstandes 16 verhältnismäßig hoch. Steuermittel 18 beeinflussen daher bedarfsweise Geschwindigkeit und/oder Richtung alternierend in entgegengesetzter Richtung, mit der wenigstens eines der Elemente umfassend Objektträger 14 oder dreidimensionaler Gegenstand 16 einerseits und Austrittsöffnung 20 andererseits unter Veränderung des Relativabstands s relativ zueinander bewegt werden. Diese Beeinflussung erfolgt vor allem beim Austragen der Tropfen aus der Austragseinheit 13 und beim Auftragen der Tropfen 15 am dreidimensionalen Gegenstand 16.

Den zugehörigen Verfahrensablauf zeigen die Figuren 2a bis 2f. Zum Aufbringen der diskontinuierlichen Tropfen 15 wird das verfestigbare Material in der Plastifiziereinheit 11 plastifiziert und aus dem dortigen Materialspeicher 12 mit der taktbaren Austragseinheit 13 tropfenförmig ausgebracht. Gemäß Fig. 2a werden die Tropfen 15 aus der Austrittsöffnung 20 in Richtung auf den Objektträger 14 ausgetragen. Auf dem Objektträger 14 befinden sich bereits einige Tropfen, die bereits die Kontur des Gegenstandes 16 erkennen lassen. Objektträger 14 oder dreidimensionaler Gegenstand 16 einerseits und Austrittsöffnung 20 andererseits sind unter Änderung ihres Relativabstands relativ zueinander im Raum zur Beeinflussung der Tropfenform bewegbar. Gegenüber Fig. 2a ist in Fig. 2b der Tropfen 15 bereits aus der Austragseinheit 13 ausgetreten und steht inzwischen in Kontakt mit dem Objektträger 14 bzw. dem zuvor bereits aufgebauten dreidimensionalen Gegenstand 16. Zu erkennen ist, dass der Tropfen 15 in diesem Moment sowohl mit der Austragseinheit 13 als auch mit dem Objektträger 14 in Verbindung steht. Der Abstand zwischen Austragseinheit und Objektträger entspricht dabei etwa der Länge l des Tropfens beim Austragen.

Wird im nächsten Schritt der Relativabstand s gemäß Fig. 2c in diesem Fall durch eine Bewegung des Objektträgers 14 vertikal nach unten vergrößert (alternativ könnte auch die Austragseinheit 13 nach oben bewegt werden), so fördert dies das Abreißen des Tropfens 15 von der Austragseinheit 13, was zugleich dazu beiträgt, dass der nächste Tropfen zügig ausgetragen werden kann.

Nach dem Abreißen des Tropfens 15 wird der Objektträger 14 gemäß Fig. 2d in Richtung des Pfeils vertikal nach oben entgegen der Schwerkraft bewegt. Diese Beschleunigung entgegen der Schwerkraft fördert die Verteilung des Tropfens 15 auf dem Objektträger 14 oder auf dem dreidimensionalen Gegenstand 16 dahingehend, dass Hohlräume besser ausgefüllt werden und eine Verflachung des Tropfens 15 entsteht.

Damit nicht genug, wird im nächsten Schritt gemäß Fig. 2e der Relativabstand s auf den Relativabstand s' bis zur Auftragshöhe einer Schicht verringert, d.h. soweit verringert, bis die Austragseinheit 13 den am dreidimensionalen Gegenstand 16 befindlichen Tropfen berührt. Diese kurze Berührung vor Ansteuerung des nächsten Tropfens durch die Austragseinheit auf dem dreidimensionalen Gegenstand 16 führt zu einer zusätzlichen geometrischen Stabilisierung und damit zu einem ebenen Auftrag. Nach dieser Berührung kann der Objektträger 14 und/oder die Austragseinheit 13 relativ zueinander in Richtung des horizontalen Pfeils versetzt werden, bevor gemäß Fig. 2f der nächste Tropfen angesteuert wird, wobei zuvor der Relativsabstand s durch eine Vertikalbewegung im Ausführungsbeispiel des Objektträgers wieder vergrößert wird.

Die alternierende Bewegung von Objektträger 14 bzw. dreidimensionalem Gegenstand 16 einerseits und Austragseinheit 13 andererseits unter Veränderung des Relativabstandes s zwischen diesen Elementen im Wesentlichen in vertikaler Richtung, also mit oder entgegen der Schwerkraft erhöht deutlich die Qualität des herzustellenden Gegenstandes 16. Einerseits erfolgt ein klarer Abriss der Tropfen 15, andererseits eine deutliche Verfestigung des aufgetragenen Tropfens 15 am Objekt.

### Bezugszeichenliste

- 11: Plastifiziereinheit
- 12: Materialspeicher
- 13: Austragseinheit
- 14: Objektträger
- 15: Tropfen
- 16: Gegenstand
- 18: Steuermittel
- 20: Austrittsöffnung

- s, s': Relativabstand
- l: Länge eines Tropfens
- x, y, z: Bewegungsrichtung Objektträger

## Patentansprüche

1. Verfahren zur Herstellung eines dreidimensionalen Gegenstandes (16) aus verfestigbarem Material, das entweder im Ausgangszustand als Fluid vorliegt oder verflüssigt werden kann, durch sequentielles Austragen von diskontinuierlichen Tropfen (15) mit den Schritten
- Zurverfügungstellen oder Plastifizieren des verfestigbaren Materials in der bzw. in die fluide Phase,
- Einbringen dieser fluiden Phase in einen Materialspeicher (12) mit mindestens einer taktbaren Austragseinheit (13),
- Austragen der Tropfen (15) aus einer Austrittsöffnung (20) mittels der Austragseinheit (13) in Richtung auf einen Objektträger (14) für den herzustellenden dreidimensionalen Gegenstand (16), wobei Objektträger (14) oder dreidimensionaler Gegenstand (16) einerseits und Austrittsöffnung (20) andererseits in einem Relativabstand (s) relativ zueinander im Raum zur Beeinflussung der Tropfenform bewegbar sind,
**gekennzeichnet durch** die Schritte:
- Verändern des Relativabstands (s) alternierend in entgegengesetzter Richtung beim Austragen der Tropfen aus der Austragseinheit (13) und beim Auftragen der Tropfen am dreidimensionalen Gegenstand (16) während der Herstellung des Gegenstands (16).

2. Verfahren nach Anspruch 1, **dadurch gekennzeichnet, dass** der Tropfen (15) von der Austragseinheit (13) auf den Objektträger (14) oder den dreidimensionalen Gegenstand (16) so aufgetragen wird, dass der Tropfen sowohl mit der Austragseinheit (13) als auch mit dem Objektträger (14) oder dem dreidimensionalen Gegenstand (16) in Verbindung steht, und dass nach Auftreffen des Tropfens auf dem Objektträger (14) oder dem dreidimensionalen Gegenstand (16) ein Vergrößern des Relativabstands (s) das Abreißen des Tropfens (15) von der Austragseinheit (13) unterstützt.

3. Verfahren nach Anspruch 1 oder 2, **dadurch gekennzeichnet, dass** eine Bewegung des Objektträgers (14) oder des dreidimensionaler Gegenstand (16) nach Auftreffen des Tropfens entgegen der Schwerkraft erfolgt.

4. Verfahren nach Anspruch 3, **dadurch gekennzeichnet, dass** nach der Bewegung entgegen der Schwerkraft der Relativabstand (s) so weit verringert wird, bis die Austragseinheit (13) den am dreidimensionalen Gegenstand (16) befindlichen Tropfen (15) berührt.

5. Verfahren nach einem der vorhergehenden Ansprüche, **dadurch gekennzeichnet, dass** eine in der Spritzgießtechnik bekannten Plastifiziereinheit (11) an den unter Druck setzbaren Materialspeicher (12) zum Einbringen der fluiden Phase in den Materialspeicher angekoppelt wird und einen Druck auf die fluide Phase im Materialspeicher (12) erzeugt, der in direkter Kopplung einen diskontinuierlichen Tropfen (15) erzeugt.

6. Vorrichtung zur Herstellung eines dreidimensionalen Gegenstandes (16) aus verfestigbarem Material, das entweder im Ausgangszustand in einer fluiden Phase vorliegt oder verflüssigt werden kann, durch sequentielles Austragen von diskontinuierlichen Tropfen (15) mit
- einem Objektträger (14) für den herzustellenden dreidimensionalen Gegenstand (16),
- wenigstens einem Materialspeicher (12) für die fluide Phase des plastifizierten verfestigbaren Materials mit mindestens einer taktbaren Austragseinheit (13) zum Austragen des verfestigbaren Materials durch eine Austrittsöffnung (20) in Richtung auf den Objektträger (14) in Form der Tropfen (15),
- Steuermitteln (18) zur Steuerung eines Relativabstand (s) zwischen Objektträger (14) oder dreidimensionalem Gegenstand (16) einerseits und Austrittsöffnung (20) andererseits relativ zueinander im Raum zur Beeinflussung der Tropfenform,
**dadurch gekennzeichnet, dass** die Steuermittel (18) bedarfsweise Geschwindigkeit und/oder Richtung alternierend in entgegengesetzter Richtung beeinflussen, mit der wenigstens eines der Elemente umfassend Objektträger (14) oder dreidimensionaler Gegenstand (16) einerseits und Austrittsöffnung (20) andererseits unter Veränderung des Relativabstands (s) beim Austragen der Tropfen aus der Austragseinheit (13) und beim Auftragen der Tropfen am dreidimensionalen Gegenstand während der Herstellung des Gegenstands (16) relativ zueinander bewegt werden.

7. Vorrichtung nach Anspruch 6, **dadurch gekennzeichnet, dass** der Relativabstand (s) zwischen Objektträger (14) oder dreidimensionalem Gegenstand (16) einerseits und Austrittsöffnung (20) andererseits beim Austragen des Tropfens (15) etwa der Länge (l) des Tropfens entspricht.

8. Vorrichtung nach Anspruch 6 oder 7, **dadurch gekennzeichnet, dass** der Relativabstand (s) zwischen Objektträger (14) oder dreidimensionalem Gegenstand (16) einerseits und Austrittsöffnung (20) andererseits nach Auftreffen und Abflachen des Tropfens (15) am dreidimensionalen Gegenstand (16) der Aufbauhöhe eines Tropfens am Objekt entspricht.

9. Vorrichtung nach einem der Ansprüche 6 bis 8, **dadurch gekennzeichnet, dass** der Materialspeicher (12) durch eine in der Spritzgießtechnik bekannte Plastifiziereinheit (11) gebildet ist, die zugleich das verfestigbare Materials plastifiziert.

## Claims

1. A method for producing a three-dimensional object (16) from a solidifiable material, which is either in fluid form from the outset or can be liquefied, by sequential discharge of discontinuous droplets (15), comprising the steps
- providing or plasticising the solidifiable material in or into the fluid phase,
- introducing said fluid phase into a material storage means (12) with at least one cyclable discharge unit (13),
- discharging the droplets (15) from an outlet opening (20) by means of the discharge unit (13) towards an object carrier (14) for the three-dimensional object (16) to be produced, the object carrier (14) or three-dimensional object (16), on the one hand, and outlet opening (20), on the other hand, being movable in space at a relative spacing (s) relative to one another in order to influence the droplet shape,
**characterised by** the steps:
- varying the relative spacing (s) alternately in opposite directions on discharge of the droplets from the discharge unit (13) and on application of the droplets on the three-dimensional object (16) during production of the object (16).

2. A method according to claim 1, **characterised in that** the droplet (15) is applied by the discharge unit (13) onto the object carrier (14) or the three-dimensional object (16) in such a manner that the droplet is connected both to the discharge unit (13) and to the object carrier (14) or to the three-dimensional object (16), and **in that**, after impingement of the droplet on the object carrier (14) or the three-dimensional object (16), increasing the relative spacing (s) assists detachment of the droplet (15) from the discharge unit (13).

3. A method according to claim 1 or 2, **characterised in that**, after impingement of the droplet, the object carrier (14) or the three-dimensional object (16) is moved contrary to the direction of gravity.

4. A method according to claim 3, **characterised in that**, after the movement contrary to the direction of gravity, the relative spacing (s) is reduced such that the discharge unit (13) is in contact with the droplet (15) located on the three-dimensional object (16).

5. A method according to any one of the preceding claims, **characterised in that** a plasticising unit (11) known from injection moulding technology is coupled to the pressurisable material storage means (12) for introducing the fluid phase into the material storage means and for generating a pressure on the fluid phase in the material storage means (12) which generates a discontinuous droplet (15) in directly coupled manner.

6. An apparatus for producing a three-dimensional object (16) from a solidifiable material, which is either in the fluid phase from the outset or can be liquefied, by sequential discharge of discontinuous droplets (15), comprising
- an object carrier (14) for the three-dimensional object (16) to be produced,
- at least one material storage means (12) for the fluid phase of the plasticised solidifiable material with at least one cyclable discharge unit (13) for discharging the solidifiable material through an outlet opening (20) towards the object carrier (14) in the form of droplets (15),
- control means (18) for controlling a relative spacing (s) between object carrier (14) or three-dimensional object (16), on the one hand, and outlet opening (20), on the other hand, relative to one another in space in order to influence the droplet shape,
**characterised in that** the control means (18) influence as required alternately in opposite directions the velocity and/or direction with which at least one of the elements comprising object carrier (14) or three-dimensional object (16), on the one hand, and outlet opening (20), on the other hand, are moved relative to one another with accompanying variation of the relative spacing (s) on discharge of the droplets from the discharge unit (13) and on application of the droplets onto the three-dimensional object during production of the object (16).

7. An apparatus according to claim 6, **characterised in that** the relative spacing (s) between object carrier (14) or three-dimensional object (16), on the one hand, and outlet opening (20), on the other hand, on discharge of the droplet (15) roughly corresponds to the length (I) of the droplet.

8. An apparatus according to claim 6 or 7, **characterised in that** the relative spacing (s) between object carrier (14) or three-dimensional object (16), on the one hand, and outlet opening (20), on the other hand, after impingement and flattening of the droplet (15) on the three-dimensional object (16) corresponds to the build height of a droplet on the object.

9. An apparatus according to any one of claims 6 to 8, **characterised in that** the material storage means (12) is formed by a plasticising unit (11) known from injection moulding technology which at the same time plasticises the solidifiable material.

## Revendications

1. Procédé de fabrication d'un objet tridimensionnel (16) à partir d'un matériau durcissable qui se présente au départ soit sous la forme d'un fluide ou qui peut être fluidifié, par distribution séquentielle de gouttes (15) discontinues, comportant les étapes suivantes :
- fourniture ou plastification du matériau durcissable dans la phases fluide,
- amenée de cette phase fluide dans un réservoir de matériau (12) ayant au moins une unité de distribution cadençable (13),
- distribution des gouttes (15) à partir d'un orifice de sortie (20) au moyen de l'unité de distribution (13) vers un support d'objet (14) pour l'objet tridimensionnel à fabriquer (16), le support d'objet (14) ou l'objet tridimensionnel (16) d'une part, et l'orifice de sortie (20) d'autre part étant déplaçables d'une distance relative (s) l'un par rapport à l'autre dans l'espace pour influencer la forme des gouttes,
**caractérisé par** les étapes suivantes :
- modification de la distance relative (s) en alternant en sens opposé lors de la distribution des gouttes à partir de l'unité de distribution (13) et lors de l'application des gouttes sur l'objet tridimensionnel (16) pendant la fabrication de l'objet (16).

2. Procédé selon la revendication 1, **caractérisé en ce que** la goutte (15) de l'unité de distribution (13) est appliquée sur le support d'objet (14) ou l'objet tridimensionnel (16) de telle manière que la goutte soit en relation aussi bien avec l'unité de distribution (13) qu'avec le support d'objet (14) ou l'objet tridimensionnel (16), et qu'après la rencontre de la goutte et du support d'objet (14) ou de l'objet tridimensionnel (16), un agrandissement de la distance relative (s) favorise le détachement de la goutte (15) de l'unité de distribution (13).

3. Procédé selon la revendication 1 ou 2, **caractérisé en ce qu'**un déplacement du support d'objet (14) ou de l'objet tridimensionnel (16) se produit après la rencontre de la goutte, à l'encontre de la force de pesanteur.

4. Procédé selon la revendication 3, **caractérisé en ce qu'**après le déplacement à l'encontre de la force de pesanteur, la distance relative (s) est réduite jusqu'à ce que l'unité de distribution (13) touche la goutte (15) se trouvant sur l'objet tridimensionnel (16).

5. Procédé selon l'une des revendications précédentes, **caractérisé en ce qu'**une unité de plastification (11) connue dans le domaine du moulage par injection est couplée au réservoir de matériau (12) susceptible d'être mis sous pression pour l'amenée de la phase fluide dans le réservoir de matériau et produit sur la phase fluide dans le réservoir de matériau (12) une pression qui produit en couplage direct une goutte (15) discontinue.

6. Dispositif pour la fabrication d'un objet tridimensionnel (16) à partir d'un matériau durcissable, qui se présente au départ soit sous la forme d'une phase fluide ou qui peut être fluidifié, par distribution séquentielle de gouttes (15) discontinues, comportant
- un support d'objet (14) pour l'objet tridimensionnel à fabriquer (16) ;
- au moins un réservoir de matériau (12) pour la phase fluide du matériau durcissable plastifié ayant au moins une unité de distribution cadençable (13) pour la distribution du matériau durcissable à travers un orifice de sortie (20) vers le support d'objet (14) sous la forme de gouttes (15),
- des moyens de commande (18) pour la commande d'une distance relative (s) entre le support d'objet (14) ou l'objet tridimensionnel (16) d'une part, et l'orifice de sortie (20) d'autre part, relativement l'un à l'autre dans l'espace pour influencer la forme des gouttes, **caractérisé en ce que** les moyens de commande (18) influencent au besoin la vitesse et/ou la direction en alternant en direction opposée, vitesse et/ou direction avec et/ou dans laquelle/lesquelles l'un des éléments comprenant le support d'objet (14) et l'objet tridimensionnel (16) d'une part, et l'orifice de sortie (20) d'autre part sont déplacés l'un par rapport à l'autre en modifiant la distance relative (s) lors de la distribution des gouttes à partir de l'unité de distribution (13) et lors de l'application des gouttes sur l'objet tridimensionnel pendant la fabrication de l'objet (16).

7. Dispositif selon la revendication 6, **caractérisé en ce que** la distance relative (s) entre le support d'objet (14) ou l'objet tridimensionnel (16) d'une part et l'orifice de sortie (20) d'autre part correspond lors de la distribution de la goutte (15) à peu près à la longueur (I) de la goutte.

8. Dispositif selon la revendication 6 ou 7, **caractérisé en ce que** la distance relative (s) entre le support d'objet (14) ou l'objet tridimensionnel (16) d'une part et l'orifice de sortie (20) d'autre part correspond, après la rencontre et l'étalement de la goutte (15) sur l'objet tridimensionnel (16), à la hauteur formée par la goutte sur l'objet.

9. Dispositif selon l'une des revendications 6 à 8, **caractérisé en ce que** le réservoir de matériau (12) est formé par une unité de plastification (11) connue dans le domaine du moulage par injection, qui plastifie en même temps le matériau durcissable.
